# EUROPÄISCHE PATENTSCHRIFT

(11) **EP 0 565 995 B1**
(45) Veröffentlichungstag und Bekanntmachung des Hinweises auf die Patenterteilung: **09.08.1995**
(21) Anmeldenummer: 93105680.8
(22) Anmeldetag: 06.04.1993
(51) Int. Cl.: B23B 41/00, B23Q 17/22

(54) **Verfahren und Vorrichtung zur Abtastung der Lage des Mittelsteges eines I-Profilträgers innerhalb einer Profilträgerbohrmaschine**
Method and device for detecting the position of a I-beam in a I-beam drilling machine
Méthode et dispositif pour détecter la position de l'âme centrale d'une poutre en I dans une machine à percer les poutres

(30) Priorität: 07.04.1992 DE 4211689
(43) Veröffentlichungstag der Anmeldung: 20.10.1993
(73) Patentinhaber: HANS KALTENBACH MASCHINENFABRIK GmbH & Co. KG, 79539 Lörrach (DE)
(72) Erfinder: Dorn, Ulrich, Dipl.-Ing., W-7410 Reutlingen (DE)
(74) Vertreter: Popp, Eugen, Dr.

(56) Entgegenhaltungen:
- US-A- 4 179 230
- US-A- 4 954 022
- PATENT ABSTRACTS OF JAPAN vol. 9, no. 57 (M-363)13. M rz 1985
- PATENT ABSTRACTS OF JAPAN vol. 12, no. 442 (M-766)(3289) 21. November 1988

## Beschreibung

Die Erfindung betrifft ein Verfahren und eine Vorrichtung zur Abtastung der Lage des Mittelsteges eines I-Profilträgers relativ zu den beiden Flanschen desselben innerhalb einer Profilträgerbohrmaschine oder dgl., gemäß dem Oberbegriff des Patentanspruches 1 bzw. Patentanspruches 3.

Wenn Bohrungen in die Flansche eines I-Profilträgers relativ zur Steg-Mittenebene durchgeführt werden sollen, so muß, bedingt durch einen beim Walzen entstehenden Stegversatz, die effektive Steg-Mittenebene ermittelt werden. Dies geschieht bisher mit einer gesonderten Meßeinrichtung, welche den innerhalb der Bohrmaschine eingespannten Profilträger auf der Stegunterseite in Flanschnähe abtastet. Dabei handelt es sich um eine gesonderte Tasteinrichtung, die nach Abtastung der Stegunterseite eine entsprechende Tastposition einnimmt, wobei die Tastposition auch die halbe Stegdicke berücksichtigt, die der Stellung des Tastsensors an der Unterseite des Steges noch hinzugezählt werden muß, um die Stegmittenebene an jeder Flanschseite zu erhalten, die zugleich Nullebene für ein Flansch-Bearbeitungswerkzeug, z. B. Horizontalbohrer ist. Die von der vorgenannten Tasteinrichtung bestimmten Werte werden für das Bearbeitungswerkzeug festgehalten bzw. zur Positionierung desselben verwertet, z. B. im Rahmen einer CNC-Steuerung.

Das Dokument US-A-4 179 230 zeigt ein Verfahren gemäß des Oberbegriffes des Anspruchs 1 und eine Vorrichtung gemäß des Oberbegriffes des Anspruchs 3.

Nachteilig bei dem bekannten System ist, daß für die Abtastung eine gesonderte Tasteinrichtung erforderlich ist, und daß - in Längsrichtung des I-Profilträgers gesehen - die Abtastung nicht zwangsweise in der Flansch-Bearbeitungsebene erfolgt.

Der vorliegenden Erfindung liegt die Aufgabe zugrunde, ausgehend von dem vorgenannten Stand der Technik ein Verfahren und eine Vorrichtung der eingangs genannten Art zu schaffen, das bzw. die mit einfacheren Mitteln eine präzisere Bestimmung der Steg-Mittenebene bzw. Bearbeitungswerkzeug-Nullebene erlaubt.

Diese Aufgabe wird verfahrensgemäß durch die Merkmale des Patentanspruches 1 und vorrichtungsgemäß durch die Merkmale des Patentanspruches 3 gelöst.

Beim erfindungsgemäßen System wird direkt mit dem Vertikal-Bearbeitungswerkzeug, insbesondere Bohrerspitze eines vertikalen Bohrers abgetastet. Dazu wird das vertikal verfahrbare Werkzeug mit einem inkrementalen Längen- bzw. Wegmeßsystem ausgestattet. Das Differenzmaß zwischen Werkzeug- bzw. Bohrerspitze und Werkstückauflage bzw. das Differenzmaß zwischen dem an der Oberseite abgetasteten Profilträgersteg und Werkstückauflage abzüglich der halben Stegdicke wird als Nullebenenfür die Flansch-Bearbeitungswerkzeuge bestimmt und an die Steuerung der Antriebe der Flansch-Bearbeitungswerkzeuge weitergeleitet.

Vorzugsweise erfolgt die Abtastung der Stegoberseite bzw. die Bestimmung der Nullebene jeweils in der Bearbeitungsebene der Flansch-Bearbeitungswerkzeuge. Dadurch ist eine präzise Messung der Steg-Mittenebene bzw. Nullebene für die Flansch-Bearbeitungswerkzeuge, z. B. Horizontalbohrwerkzeuge, möglich.

Nachstehend wird die Erfindung anhand eines in der anliegenden Zeichnung schematisch dargestellten Ausführungsbeispieles näher erläutert. In dieser Zeichnung ist mit der Bezugsziffer 10 eine Profilträgerbohrmaschine herkömmlicher Art in Frontansicht dargestellt. Diese Bohrmaschine weist eine horizontal (Doppelpfeil 22) hin- und herverfahrbare Vertikal-Bohrspindel 11 mit Vertikalbohrer 12 sowie zwei relativ zu einer zentralen Werkstückauflage 24 diametral angeordnete Horizontal-Bohrspindeln 18 und 19 auf, die jeweils vertikal in Richtung der Doppelpfeile 20, 21 auf- und abbewegbar sind. Die Bohrspindeln 11, 18 und 19 sind zusammen mit einem gemeinsamen Portal 25 in Richtung senkrecht zur Zeichenebene hin- und herverfahrbar, d. h. parallel zur Werkstückauflage. Im vorliegenden Fall geht es um die Bestimmung der Mittenebene des Steges eines auf der Werkstückauflage eingespannten I-Profilträgers, und zwar unter Berücksichtigung der Möglichkeit eines Stegversatzes bzw. einer Schräglage des Steges 15 zwischen den beiden Flanschen 16 und 17 des vorgenannten Profilträgers. Die zu bestimmenden Steg-Mittenebenen an den beiden Flanschseiten sind in der anliegenden Zeichnung mit den Bezugsziffern 26 und 27 gekennzeichnet.

Der Vertikal-Bohrspindel 11 ist eine inkrementale Wegmeßeinrichtung 23 zugeordnet, mittels der der Abstand zwischen der Spitze 13 des Vertikalbohrers 12 und der Werkstückauflage 24 und damit der Abstand zwischen der Stegoberseite des sich auf der Werkstückauflage 24 befindlichen I-Trägers 14 und der Werkstückauflage 24 bestimmbar ist. Des weiteren ist eine nicht näher dargestellte Einrichtung zur Erfassung des vorgenannten Abstandes und zum Abzug der halben Stegbreite von diesem unter Bestimmung der Steg-Mittenebenen 26, 27 bzw. Nullebenen für die beiden Horizontal-Bohrspindeln 18, 19 vorgesehen. Die vorgenannte Wegmeßeinrichtung 23 ist bei einer Vertikal-Bohrspindel in der Regel bereits vorhanden, und zwar zur Steuerung des Vorschubs der Vertikal-Bohrspindel. Erfindungsgemäß wird die vorgenannte Einrichtung zur Stegabtastung verwendet. Insofern stellt sich das beschriebene System als denkbar einfach und dennoch äußerst funktionssicher dar. Vor allem ist es auch äußerst präzise im Hinblick darauf, daß die Stegabtastung in der Bearbeitungsebene der Horizontal-Bohrspindeln 18, 19 erfolgt.

Statt der beschriebenen Bohrwerkzeuge können auch Fräswerkzeuge oder dgl. zum Einsatz kommen. In Verbindung mit einer Profilträgerbohrmaschine der hier beschriebenen Art hat sich das beschriebene System jedoch als besonders vorteilhaft und präzise herausgestellt.

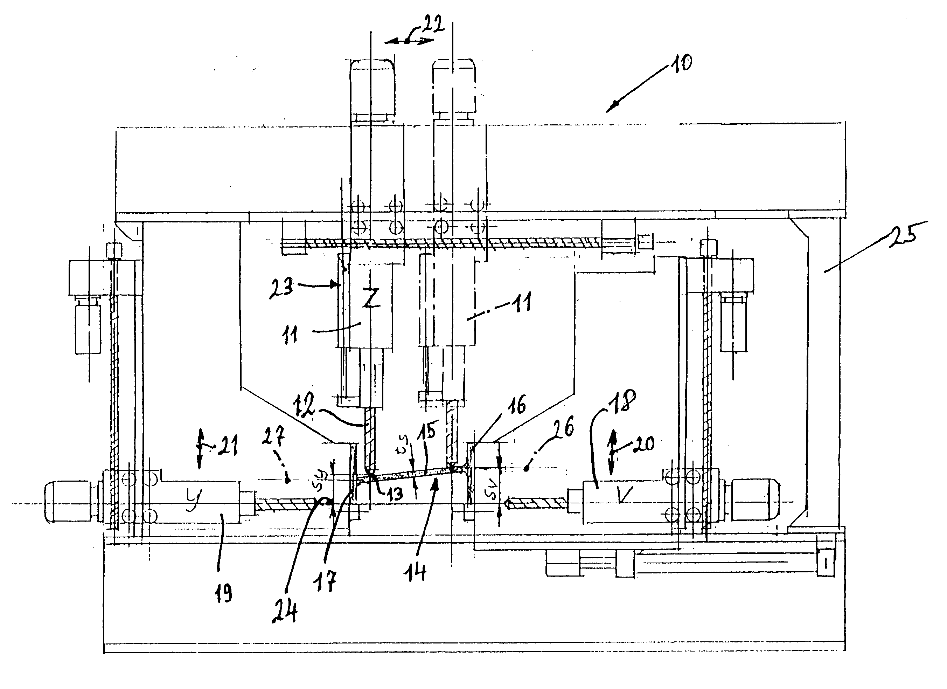

## Patentansprüche

1. Verfahren zur Abtastung der Lage des Mittelsteges (15) eines I-Profilträgers (14) relativ zu den beiden Flanschen (16, 17) desselben innerhalb einer Profilträgerbearbeitungs- insbesondere Profilträgerbohrmaschine (10), die mindestens eine, insbesondere zwei diametral angeordnete Horizontal-Bearbeitungswerkzeuge, insbesondere Horizontal-Bohrspindeln (18, 19) sowie mindestens ein Vertikal-Bearbeitungswerkzeug, insbesondere eine Vertikal-Bohrspindel (11) aufweist, wobei die I-Profilträger (14) zur Bearbeitung jeweils so plaziert sind, daß der die beiden Flansche (16, 17) miteinander verbindende Steg (15) sich etwa horizontal erstreckt
**dadurch gekennzeichnet,** daß das vertikal-Bearbeitungswerkzeug, insbesondere die Vertikal-Bohrspindel (11) jeweils flanschnah so bewegt wird, daß die Werkzeugspitze, insbesondere Bohrerspitze (13) den Steg (15) berührt, daß dann mittels einer dem Vertikal-Bearbeitungswerkzeug, insbesondere der Vertikal-Bohrspindel (11) zugeordneten Wegmeßeinrichtung (23) der Abstand zwischen der Werkzeugspitze, insbesondere Bohrerspitze (13) bzw. der Oberseite des Steges (15) und der Profilträgerauflage (24) gemessen wird, und daß anschließend unter Abzug der halben Stegdicke an jeder Flanschseite des I-Profilträgers (14) die Steg-Mittenebenen(26, 27) bzw. Nullebenenfür die Horizontal-Werkzeuge, insbesondere Horizontal-Bohrspindeln (18, 19) bestimmt wird.

2. Verfahren nach Anspruch 1,
dadurch gekennzeichnet, daß die Abtastung der Stegoberseite bzw. die Bestimmung der Nullebene (26, 27) jeweils in der Bearbeitungs-, insbesondere Bohrebene der Horizontal-Bearbeitungswerkzeuge, insbesondere Horizontal-Bohrspindeln (18, 19) erfolgt.

3. Vorrichtung zur Abtastung der Lage des Mittelsteges (15) eines I-Profilträgers (14) relativ zu den beiden Flanschen (16, 17) desselben innerhalb einer Profilträgerbearbeitungs-, insbesondere Profilträgerbohrmaschine (10), die mindestens eine, insbesondere zwei diametral angeordnete Horizontal-Bearbeitungswerkzeuge, insbesondere Horizontal-Bohrspindeln (18, 19) sowie mindestens ein Vertikal-Bearbeitungswerkzeug, insbesondere eine Vertikal-Bohrspindel (11) aufweist, wobei die I-Profilträger (14) zur Bearbeitung jeweils so plaziert sind, daß der die beiden Flansche (16, 17) miteinander verbindende Steg (15) sich etwa horizontal erstreckt
**dadurch gekennzeichnet,** daß dem vertikal-Bearbeitungswerkzeug, insbesondere der Vertikal-Bohrspindel (11), eine inkrementale Wegmeßeinrichtung (23) zugeordnet ist, mittels der der Abstand zwischen der Spitze (13) des Vertikal-Bearbeitungswerkzeuges, insbesondere des Vertikalbohrers (12), und einer Werkstückauflage (24) und damit der Abstand zwischen der Stegoberseite des sich auf der Werkstückauflage (24) befindlichen I-Profilträgers (14) und der Werkstückauflage (24) bestimmbar ist, und daß eine Einrichtung zur Erfassung des vorgenannten Abstands und zum Abzug der halben Stegbreite von diesem unter Bestimmung der Steg-Mittenebene (26, 27) bzw. Nullebene für die jedem Profilträger-Flansch (16, 17) zugeordneten Horizontal-Bearbeitungswerkzeuge, insbesondere Horizontal-Bohrspindeln (18, 19) vorgesehen ist.

## Claims

1. Process for sensing the position of the middle cross-piece (15) of an I-profile beam (14) with respect to its two flanges (16, 17) inside a profile beam processing machine, in particular drilling machine (10) which comprises at least one, in particular two diametrally disposed horizontal processing tools, in particular horizontal drilling spindles (18, 19) and at least one vertical processing tool, in particular a vertical drilling spindle (11), wherein the I-profile beams (14) are each placed for processing in such a way that the cross-piece (15) connecting the two flanges (16, 17) to each other extends approximately horizontally, characterised in that the vertical processing tool, in particular the vertical drilling spindle (11) is moved close to the flange in such a way that the tip of the tool, in particular the drill tip (13) touches the cross-piece (15), that by means of a distance measuring device (23), allocated to the vertical processing tool, in particular the vertical drilling spindle (11), the distance between the tip of the tool, in particular the drill tip (13) or the upper side of the cross-piece (15) and the profile beam support (24) is then measured, and that subsequently, subtracting half the cross-piece thickness at each flange side of the I-profile beam (14) the cross-piece middle levels (26, 27) or zero levels are determined for the horizontal tools, in particular the horizontal drilling spindles (18, 19).

2. Process according to claim 1, characterised in that the sensing of the upper side of the cross-piece or the determining of the zero level (26, 27) is achieved respectively at the processing level, in particular the drilling level of the horizontal processing tools, in particular horizontal drilling spindles (18, 19).

3. Device for sensing the position of the middle cross-piece (15) of an I-profile beam (14) with respect to its two flanges (16, 17) inside a profile beam processing machine, in particular drilling machine (10) which comprises at least one, in particular two diametrally disposed horizontal processing tools, in particular horizontal drilling spindles (18, 19) and at least one vertical processing tool, in particular a vertical drilling spindle (11), wherein the I-profile beams (14) are each placed for processing in such a way that the cross-piece (15) connecting the two flanges (16, 17) to each other extends approximately horizontally, characterised in that an incremental distance measuring device (23) is allocated to the vertical processing tool, in particular the vertical drilling spindle (11) by means of which distance measuring device the distance between the tip (13) of the vertical processing tool, in particular the vertical drill (12) and a work piece support (24) and therefore the distance between the upper side of the cross-piece of the I-profile beam (14) located on the work piece support (24) and the work piece support (24) can be determined, and that a device to detect the said distance and to subtract half the width of the cross-piece from this distance, determining the cross-piece middle level (26, 27) or zero level, is provided for the horizontal processing tools, in particular horizontal drilling spindles (18, 19) allocated to each profile beam flange (16, 17).

## Revendications

1. Procédé d'analyse de la position de la traverse (15) d'un profilé en I (14) par rapport aux deux ailes (16, 17) de ce dernier à l'intérieur d'une machine d'usinage, d'une perceuse (10), notamment, de profilés, qui présente un outil, au moins, deux outils d'usinage horizontaux disposés diamétralement, notamment, des broches de perçage horizontales (18, 19), en particulier, et un outil d'usinage vertical, au moins, une barre d'alésage verticale (11), notamment, les profilés en I (14) étant respectivement placés pour l'usinage, de sorte que la traverse (15), assemblant entre elles les deux ailes (16, 17), s'étend à peu prés à l'horizontale, caractérisé en ce que l'outil d'usinage vertical, la barre d'alésage verticale (11) notamment, est déplacée au voisinage des ailes, de sorte que la pointe de l'outil, la pointe (13) du foret notamment, entre au contact de la traverse (15), en ce que la distance entre la pointe de l'outil, la pointe (13) du foret notamment, et/ou le côté supérieur de ta traverse (15) et le support (24) du profilé, est ensuite mesurée au moyen d'un système de mesure de déplacement (23) associé à l'outil d'usinage vertical, à la barre d'alésage verticale (11), notamment, et en ce que les plans médians de la traverse (26, 27) et/ou les plans neutres pour les outils horizontaux, les broches de perçage horizontales (18, 19), notamment, sont ensuite déterminés sur chaque côté des ailes du profité en I, en déduisant la demi-épaisseur de la traverse.

2. Procédé suivant la revendication 1, caractérisé en ce que l'analyse du côté supérieur de la traverse et/ou la détermination du plan neutre (26, 27) sont assurées dans le plan d'usinage, de perçage notamment, des outils d'usinage horizontaux, des broches de perçage horizontales (18, 19) en particulier.

3. Dispositif d'analyse de la position de la traverse (15) d'un profilé en I (14) par rapport aux deux ailes (16, 17) de ce dernier à l'intérieur d'une machine d'usinage, d'une perceuse (10) notamment, de profilés, qui présente un outil, au moins, deux outils d'usinage horizontaux disposés diamétralement, notamment, des broches de perçage horizontales (18, 19) en particulier, et un outil d'usinage vertical, au moins, une barre d'alésage verticale (11), notamment, les profilés en I (14) étant respectivement placés pour l'usinage, de sorte que la traverse (15), assemblant entre elles les deux ailes (16, 17), s'étend à peu près à l'horizontale, caractérisé en ce qu'un capteur de déplacement (23) est associé à l'outil d'usinage vertical, à la barre d'alésage verticale (11), notamment, ce capteur permettant de déterminer la distance entre la pointe (13) de l'outil d'usinage vertical, du foret vertical (12) notamment, et un porte-pièce (24), c'est-à-dire la distance entre le côté supérieur de la traverse du profilé en I (14), situé sur le porte-pièce (24), et le porte-pièce (24), et en ce qu'un dispositif est prévu pour déterminer la distance précitée et pour déduire de cette dernière la demi-largeur de la traverse, en déterminant le plan médian (26, 27) de la traverse et/ou le plan neutre pour les outils d'usinage horizontaux, les broches de perçage horizontales (18, 19), notamment, associés à chaque aile (16, 17) des profilés.
